# EUROPEAN PATENT APPLICATION

(11) **EP 1 755 349 A1**
(43) Date of publication of application: **21.02.2007**
(21) Application number: 05109053.8
(22) Date of filing: 30.09.2005
(51) Int. Cl.: H04Q 7/22

(54) **Text or media message service and mobile communication network**

(30) Priority: 19.08.2005 DE 102005039364
(71) Applicant: SIEMENS AKTIENGESELLSCHAFT, 80333 München (DE)
(72) Inventor: Preseren, Dr. Rok, 1260 Ljubljana-Pojle (SI); Qian, Faqiang, 1210 Wien (AT); Schmitt, Peter, 36251 Ludwigsau (DE)

(57) **Abstract**

Text or media message service in a mobile communication network of the GSM or 3GPP type, wherein a SMS or MMS is sent to a group of receiving terminals by addressing a group-call-reference or a broadcast-call-reference as a destination address.

## Description

The invention relates to a text or media message service, as well as to a mobile communication network being arranged to provide such service.

The transmission of text or media content messages forms one of the most important services both of GSM and 3GPP mobile communication networks and a major field of future development. In this regard, starting from the simple SMS of the early GSM systems recently enhanced services, such as MMS, have been provided for the users to encourage a broader use of the capabilities of up-to-date mobile networks.

On the other hand, in the course of the recent refinement of GSM and 3GPP voice call services, a voice group call service and a voice broadcast service have been established.

The GSM/3G feature Voice Group Call Service (VGCS) allows an entitled subscriber to establish Voice Group Calls for predefined groups (refer to 3G TS 43.068). When a VGCS call is established, the initiator (the entitled subscriber) can talk in the first phase till he gives up the talking rights by using Uplink release procedure.

After the first talker (talking service subscriber) has given up his talking rights, another service subscriber can get the talking rights. Of cause, the initiator can become talker later again. The principle is that only one talker (first talker or subsequent talker) is allowed to talk at a certain point of time. (An exception is that up to five dispatchers can be involved in the group call and can talk simultaneously with the talking service subscriber. Each dispatcher uses a dedicated full duplex channel connected to the conference bridge).

The GSM/3G feature Voice Broadcast Service has the similar functionality as the VGCS. It has only the exception from the VGCS that the VBS does not allow subsequent talker (refer to 3G TS 43.069).

Basically, it would desirable that participants in a group communication should receive text messages which are addressed to the group (talking subscriber and subscribers in group receive mode). The text messages should be initiated by a member of the group or from someone not taking part in the group communication.

Hence, it is an object of the present invention to provide for an enhanced text or media message service, respectively, which facilitates the communication between plural users, in particular connected to a voice group call service. Furthermore, it is an object of the invention to provide for a correspondingly improved mobile communication network.

These objects are solved by a service or process according to claim 1 and by a mobile communication network according to claim 4. Advantageous embodiments of the invention are subject of the dependent claims.

The invention covers the case that normal subscriber (which does not participate in the group call) or the current talker sends SMS to a group, and there is also a proposal how a listener can send an SMS. The proposal of sending a text message from a listener is based on the additional functionality to support a second talker.

The invention provides for enhanced customer satisfaction due to the new functionality on sending SMS to a VGCS/VBS group and the functionality to allow a second talker in a VGCS/VBS call e.g. for sending SMS when there is a Talker already active in the VGCS/VBS call.

Accordingly, regarding the origination of the SMS, the following cases have to be distinguished:

### - SMS from an individual subscriber

The originating of the SMS is the same as for standard SMS service defined in 3GPP TS 23.040. Only transmitting side is impacted by this proposal. The difference is that a destination address a group-call-reference is entered.

### - SMS from talking subscriber

Talking service subscriber communicates on dedicated channel. Therefore no principle difficulty exists to re-use standardized MO SMS procedures. The only limitation is that network shall not maintain SMS transaction if uplink is released, for whatever reason. This is in contrast to case of ptp transaction where MS and network continue communication on SDCCH when traffic channel is released and SMS transaction is still ongoing. This restriction shall be valid for Stage 1 of GSM VGCS, while in further stages possible enhancements may be elaborated.

### - SMS from listening subscriber (better MS in group receive mode)

This paragraph drafts sending of SMS from MS in group receive mode, although the subscriber has no signalling channel to send SMS. 3 solutions are possible based on existing functionality:
A) Listener leaves the group call and sends the SMS
B) Sending of SMS via GPRS
C) System supports second talker functionality

Case A) This has the disadvantage that the subscriber is not able to listen anymore to the group call when sending the SMS.
Case B) Sending of SMS via GPRS requires a class A mobile with VGCS/VBS support which is currently not available on the marked it is only described in standards.

Based on the arguments Case A and B are out of scope of this invention.

Case C) The additional uplink for second talker will be granted when second talker requests the uplink by using the uplink access procedure. The talker request can be performed in 2 ways using the existing cause or creating a new cause.

If Anchor MSC receives a SMS to a group call reference when the group call is not established it may set a flag "message waiting data" and store the "SMS center address" for that particular group call. If the group call is established an indication to SMS-GMSC should be send that the group call is now active. If the delivery of the SMS is still pending at SMS Service center the SMS service center may trigger resending of the SMS.

Regarding the forwarding of an SMS, the following cases have to be distinguished:

### Forward-SMS from SMS-GMSC to Anchor MSC

Forward-SMS from SMS-GMSC to Anchor MSC is directed to MSISDN number. Anchor MSC shall check if received MSISDN is a Group/Broadcast Call Reference and whether pertaining group/broadcase call is ongoing. If not then SMS shall be discarded. Otherwise MSC shall direct SMS to group/broadcast call resources in Anchor MSC and from there to BSS of Anchor MSC and to all Relay MSC-s.

### Forward-SMS from Anchor to Relay MSC

Forward-SMS service for transportation from Anchor to Relay MSC is preferred because Relay MSC can reuse implemented handling of Anchor MSC. Since Anchor MSC has to handle Forward SMS message from SMS-GMSC, the same principle can be reused in Relay MSC.

There are two ways to handle the new MAP procedure for send forward SMS to a group call reference:
- send a Forward-SMS message on an already established VGCS/VBS MAP connection or
- open new MAP connection.
   Opening new MAP connection would be advantageous, because it leads to the same reception handling of the existing Forward-SMS service.

Regarding the transport of an SMS from the MSC to the connected MS, the following aspects are relevant:

Use new messages, e.g. VGCS_SMS

New message shall be sent as BSSMAP message type on Call Controlling VGCS/VBS resource toward BSC. Such handling minimizes signalling between MSC and BSC and thus reduces the load on both entities, but BSC shall implement a distribution function for SMS. Since we foresee a similar concept for distribution of Talker Identity, this is not a novelty.

Similarly, new message shall be used on Air Interface. Please note that SMS shall be directed to all VGCS/VBS participating MS's, which are basically in group receive mode. In such mode MS can operate only in Unacknowledged service, which limits length of Air interface message to 20 bytes. Since the maximum possible length of useful data to be transferred is around 142 bytes, segmenting mechanism is required on Air interface.

### Use DTAP message CP_DATA

In this case BSC acts as relay for SMS, therefore CP_DATA shall be sent on Radio Ressource controlling connections to BSS. Segmenting needs to be performed in BSS. Segmentation at MSC level is not preferred by MSC.

Regarding the acknowledgement of a transmitted SMS, it has to be noted that SMS can not be acknowledged in VGSC/VBS without server modifications of uplink access for MS in group receive mode. Since the number of MS in group receive mode is in principle unlimited, an access problem may occur. To develop feasible solution an upper limit of MS in group receive mode per VGCS/VBS cell shall be set first. We propose not to discuss this issue at this stage, but rather postpone it to eventual Stage 2 of GSM BOS project.

Therefore Delivery Report just acknowledges successful/unsuccessful transportation of SMS to all MSC of VGCS/VBS call.

In accordance with the invention or preferred embodiments thereof, the following modifications of the valid standards have to be considered:

### TS 29.002 - MAP interface

The reuse of existing MAP messages is a first assumption. New messages needs to be created for this functionality, due to the fact that current SMS delivery relies on a fixed relationship between MSISDN and IMSI (LMSI) and no IMSI(LMSI) is assigned to a groupcallreference.

### MAP- VGCS-VBS-MT-FORWARD-SHORT-MESSAGE service

The service is based on MAP-MT-FORWARD-SHORT-MESSAGE service. This service is used between the gateway MSC and the servicing MSC or the SGSN to forward mobile terminated short messages. Service should be used between Anchor MSC and Relay MSC of VGCS or VBS call.
The MAP- VGCS-VBS-MT-FORWARD-SHORT-MESSAGE service is a confirmed service using the service primitives given in table 12.9/1.

### Service primitives

**Table 12.9/1: MAP-MT-FORWARD-SHORT-MESSAGE**

| **Parameter name** | **Request** | **Indication** | **Response** | **Confirm** |
|---|---|---|---|---|
| Invoke Id | M | M(=) | M(=) | M(=) |
| SM RP DA | M | M(=) | | |
| SM RP OA | M | M(=) | | |
| SM RP UI | M | M(=) | C | C(=) |
| More Messages To Send | C | C(=) | | |
| User error | | | C | C(=) |
| Provider error | | | | O |

### Parameter use

### Invoke id

See definition in clause 7.6.1

### SM RP DA

See definition in clause 7.6.8. This parameter can contain either an IMSI or a LMSI. The use of the LMSI is an operator option. The LMSI can be provided if it is received from the HLR. The IMSI is used if the use of the LMSI is not available.
This parameter is omitted in the mobile terminated subsequent SM transfers.
In the new service for MAP-VGCS-VBS-MT-FORWARD-SHORT-MESSAGE this parameter contains Group/Broadcast Call Reference (optionally with CC and NDC prefixes).

### SM RP OA

See definition in clause 7.6.8. The Service Centre address received from the originating Service Centre is inserted in this parameter.
This parameter is omitted in the mobile terminated subsequent SM transfers.
In case of SMS transfer from Anchor to Relay MSC of VGCS/VBS this parameter contains Anchor MSC address.

### SM RP UI

See definition in clause 7.6.8. The short message transfer protocol data unit received from the Service Centre is inserted in this parameter. A short message transfer protocol data unit may also be inserted in this parameter in the message delivery acknowledgement from the MSC or from the SGSN to the Service Centre.

### More Messages to Send

See definition in clause 7.6.8. The information from the MMS indication received from the Service Centre is inserted in this parameter.

### User error

The following errors defined in clause 7.6.1 may be used, depending on the nature of the fault:
- Unidentified subscriber;
- Absent Subscriber_SM;
- Subscriber busy for MT SMS;
- Facility Not Supported;
- Illegal Subscriber indicates that delivery of the mobile terminated short message failed because the mobile station failed authentication;
- Illegal equipment indicates that delivery of the mobile terminated short message failed because an IMEI check failed, i.e. the IMEI was blacklisted or not white-listed;
- System Failure;
- SM Delivery Failure
   - The reason of the SM Delivery Failure can be one of the following in the mobile terminated SM:
      - memory capacity exceeded in the mobile equipment;
      - protocol error
      - mobile equipment does not support the mobile terminated short message service.
   - Unexpected Data Value;
   - Data Missing.

### Provider error

For definition of provider errors see clause 7.6.1.

### TS 44.068/44.069

### New MS states

New MS state Group Receive and 2^{nd} talker mode shall be defined for MS supporting VGCS/VBS. In this mode, MS acts like in Group transmit mode, but shall exit the mode and return to Group receive mode as soon as it stops transmitting SMS.

### TS 48.008

### VGCS_SMS

Although all elements are indicated as optional at least one element shall be present in the message, otherwise message is invalid from protocol point of view.

| **INFORMATION ELEMENT** | **REFERENCE** | **DIRECTION** | **TYPE** | **LEN** |
|---|---|---|---|---|
| Message Type | 3.2.2.1 | MSC-BSS | M | 1 |
| | | | | |
| SMS_to_VGCS/VBS | | MSC-BSS | O | |
| | | | | |

It is foreseen that SMS contains up to 160 characters, where 7 bits are used per character; that presents total of 1120 bits, or 140 bytes. The layout of SMS_to_VGCS/VBS information element is the following:

| **8** | **7** | **6** | **5** | **4** | **3** | **2** | **1** | |
|---|---|---|---|---|---|---|---|---|
| **SMS_to_VGCS/VBS IEI** | | | | | | | | **octet 1** |
| **Length** | | | | | | | | **octet 2** |
| **SMS content** | | | | | | | | **Octet 3-144** |

It is assumed that SMS content field is formatted as follows, when received in ForwardSMS at Anchor MSC:

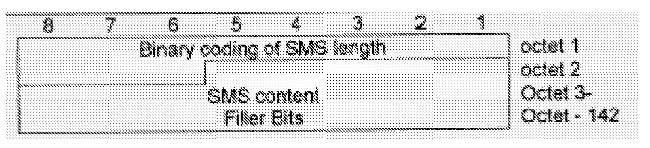

Since SMS is limited to maximum 1120 bits, in multiples of 7, 11 bits are reserved for coding of SMS length. In case of SMS being 160 characters long the total length of useful information is 1131 bits. In this case 5 filler bits shall be added to format A-interface message on byte boundary. Therefore maximum length of SMS content may be 142 bytes, and maximum length of SMS_to_VGCS/VBS IE is 144 bytes. In all cases where SMS content does not end on byte boundary filler bits have to be added.

### TS 44.018

### VGCS/VBS_SMS

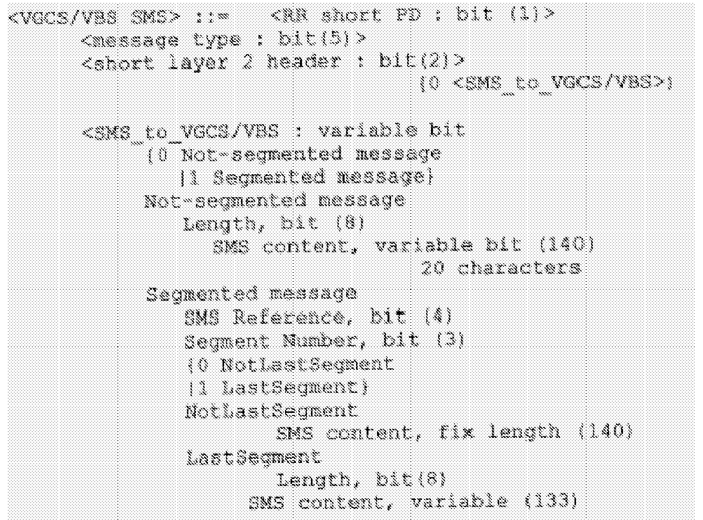

SMS Reference is a random number, identifying an SMS in a segmented message. It shall be used by MS to reassemble SMS.

### Uplink access

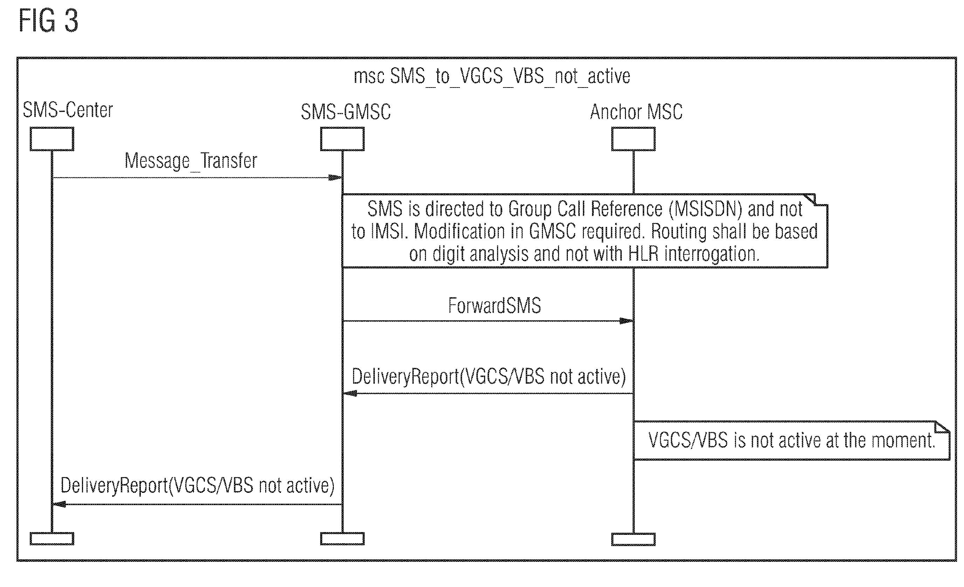

This message is sent in random mode on the voice group call channel uplink. It does not follow the basic format. This possible formats are presented directly below, without reference to information fields. The order of bit transmission is defined in 3GPP TS 44.004.
The message is only one octet long, coded as shown in Figure 9.1.45.1/3GPP TS 44.018 and Table 9.1.45.1/3GPP TS 44.018.

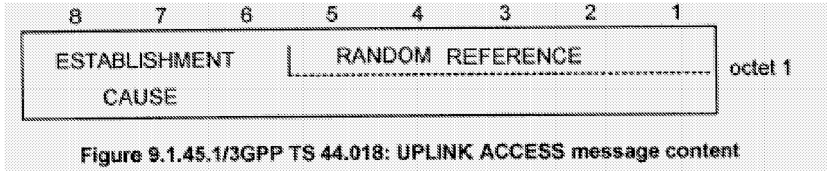

### ESTABLISHMENT CAUSE (octet 1)

This information field indicates the reason for requesting the establishment of a connection. This field has a variable length (from 3 bits up to 8 bits).
RANDOM REFERENCE (octet 1)
This is an unformatted field with variable length (from 1 bits down to 0 bits).
The Uplink access message is coded as follows:

### (Random Reference field is filled with "x")

**extension for Table 9.1.45. 1/3GPP TS 44.018: UPLINK ACCESS message content**

| **Message** **87654321** | **Meaning of Establishment Cause** | |
|---|---|---|
| 010xxxxx | 2^{st} Talker request | <- NEW |
| 110xxxxx | Sybsequent talker uplink request | |

Note: this is an example on the used causes. Depending on other introduced functionality the cause might vary..

### Uplink busy

The understanding of this message is only required for mobile stations supporting VGCS talking.
This message is broadcasted on the voice group call channel on the main DCCH, SAPI=0, by the network in unacknowledged mode to inform the mobile station of the uplink status of the voice group call channel. See Table 9.1.46.1/3GPP TS 44.018. Message type: UPLINK BUSY

### Significance: dual

### Direction: network to mobile station

**Extensions for Table 9.1.46. 1/3GPP TS 44.018: UPLINK BUSY message content**

| **IEI** | **Information element** | **Type/Reference** | **Presence** | **Format** | **length** | |
|---|---|---|---|---|---|---|
| | RR management Protocol Discriminator | Protocol Discriminator 10.2 | M | V | 1/2 | |
| | Skip indicator | Skip indicator | M | V | 1/2 | |
| | Uplink busy Message Type | 10.3,1 Message Type | M | V | 1 | |
| | Cause | 0.4 Estabilstwsent Cause of Uplint | O | | 1 | <- NEW |

In the accompanying figures of the drawing,

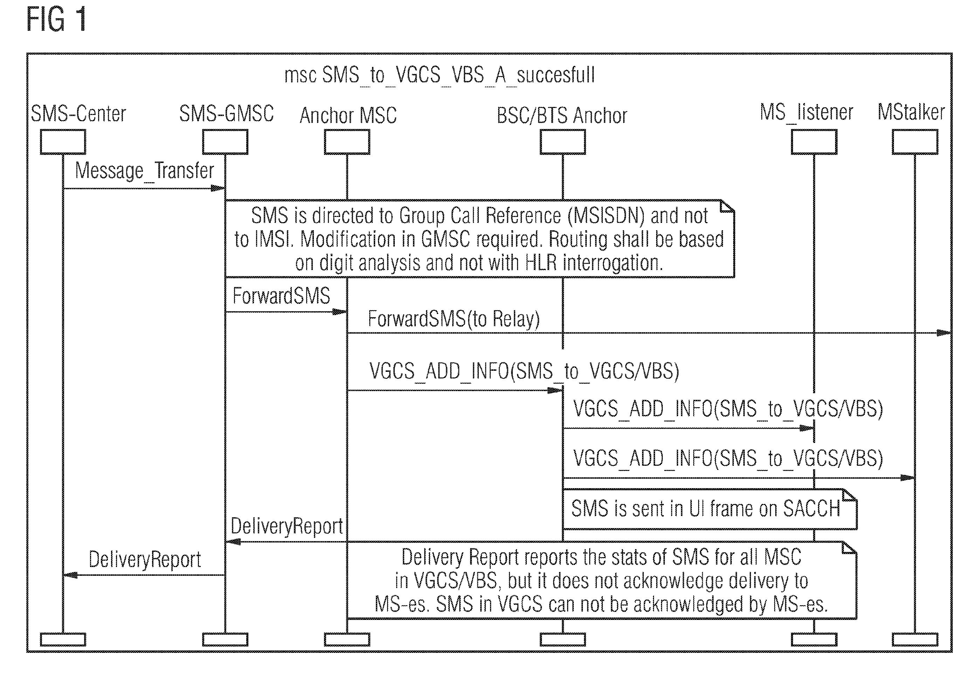

fig. 1 shows the delivery of an SMS to ongoing VGCS/VBS in anchor MSC area,

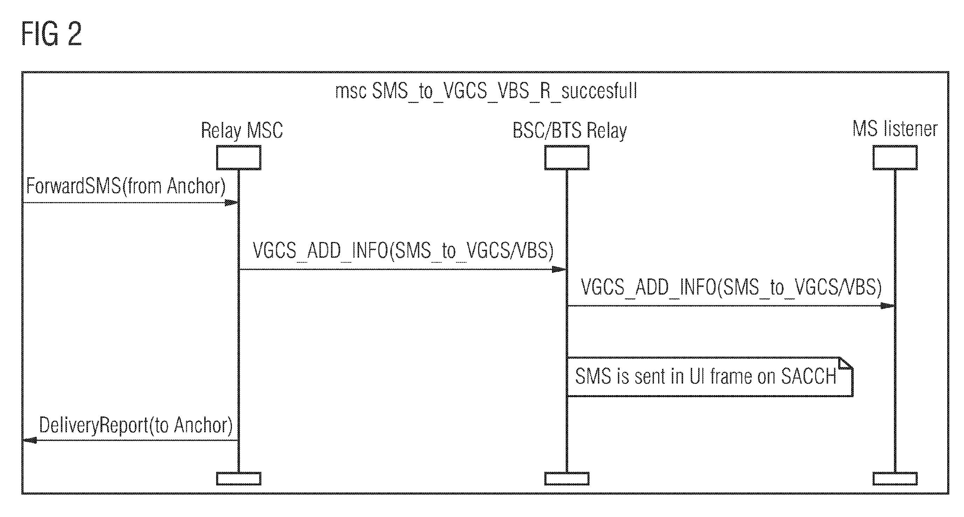

fig. 2 shows the delivery of an SMS to ongoing VGCS/VBS in relay MSC area, and
fig. 3 shows the unsuccessful delivery of an SMS to VGCS/VBS which is not active,
each in the form of a schematic call flow diagram.

It is submitted that the features which can be derived from these call flows in the context of the above general description form features of preferred embodiments of the invention.

## Claims

1. Text or media message service in a mobile communication network of the GSM or 3GPP type, wherein a SMS or MMS is sent to a group of receiving terminals by addressing a group-call-reference or a broadcast-call-reference as a destination address.

2. Text or media message service according to claim 1, wherein the SMS or MMS is sent to the group originating from an individual service subscriber or talking service subscriber, using standard SMS service or MO SMS procedures, respectively.

3. Text or media message service according to claim 1, wherein the SMS or MMS is sent to the group originating from a listening service subscriber, using an additional uplink access procedure.

4. Mobile communication network, comprising means for carrying out the service of one of claims 1 to 3.
